# EUROPÄISCHE PATENTSCHRIFT

(11) **EP 0 395 739 B1**
(45) Veröffentlichungstag und Bekanntmachung des Hinweises auf die Patenterteilung: **04.08.1993**
(21) Anmeldenummer: 89902742.9
(22) Anmeldetag: 28.02.1989
(51) Int. Cl.: H04B 3/46

(54) **VERFAHREN ZUR STEUERUNG UND/ODER ÜBERWACHUNG UND SCHALTUNGSANORDNUNG ZUR DURCHFÜHRUNG DES VERFAHRENS**
PROCESS FOR CONTROLLING AND/OR MONITORING AND CIRCUIT ARRANGEMENT FOR IMPLEMENTING THE PROCESS
PROCEDE DE COMMANDE ET/OU DE CONTROLE, CIRCUITS DE MISE EN OEUVRE DU PROCEDE

(30) Priorität: 03.03.1988 DE 3806949; 03.03.1988 DE 3806948
(43) Veröffentlichungstag der Anmeldung: 07.11.1990
(73) Patentinhaber: Philips Patentverwaltung GmbH, 22335 Hamburg (DE); Philips Electronics N.V., 5621 BA Eindhoven (NL); SIEMENS AKTIENGESELLSCHAFT, 80333 München (DE)
(72) Erfinder: HERRMANN, Karl, D-8501 Eckental (DE); NARJES, Ferdinand, D-8000 München 70 (DE); STEINER, Erhard, D-8031 Eichenau (DE); WEIMERT, Günter, D-8000 München 71 (DE)
(74) Vertreter: Fuchs, Franz-Josef, Dr.-Ing.
(86) Internationale Anmeldenummer: DE8900115
(87) Internationale Veröffentlichungsnummer: WO8908354

(56) Entgegenhaltungen:
- EP-A- 0 193 835
- FR-A- 2 289 088

## Beschreibung

Die Erfindung bezieht sich auf ein wie im Oberbegriff des Patentanspruchs 1 angegebenes Verfahren zur Steuerung und/oder Überwachung.

Ein derartiges Verfahren ist bereits aus der DE-A-3 436 414 bekannt. Bei dem bekannten Verfahren werden die Adressen mit Hilfe von Codierschaltern eingestellt.

Ein Verfahren zur In-Betrieb-Überwachung einer Nachrichtenübertragungseinrichtung, bei der Nutzsignale über eine elektrooptische Übertragungsstrecke und Telemetriesignale über einen Hilfskanal übertragen werden, ist bereits aus Ewald Braun und Erhard Steiner: "Überwachung und zusätzliche Dienste der Digitalübertragungssysteme für Lichtwellenleiter" telcom report 10 (1987) Special "Multiplex- und Leitungseinrichtungen", Seite 109 bis 114 bekannt.

Das bekannte Verfahren verwendet adressenfreie Telemetrietelegramme, so daß die in den Leitungsendgeräten und Zwischenregeneratoren eines Übertragungsabschnitts vorgesehenen Prozessoreinheiten nicht adressiert zu werden brauchen. Das Verfahren läßt sich jedoch nicht ohne weiteres in Nachrichtenübertragungseinrichtungen anwenden, die eine Stern-bzw. Baumstruktur haben. Sieht man in einem Nachrichtenübertragungsnetz mit Stern- bzw. Baumstruktur im Telegrammübertragungsnetz der zugehörigen Telemetrieinrichtung Prozessoreinheiten vor, die durch eine Ortungseinheit in zyklischer Folge adressengesteuert aufgerufen werden, so kann man auch für das Telegrammübertragungsnetz der Telemetrieeinrichtung eine dem Nutzsignalnetz entsprechende Struktur vorsehen.

Dies gilt auch für Einrichtungen zur Verteilung elektrischer Energie oder dergleichen, die mit Hilfe einer Fernwirkeinrichtung überwacht werden sollen.

Aufgabe der Erfindung ist es, ein Verfahren und eine Schaltungsanordnung zur Durchführung des Verfahrens anzugeben, die es gestatten, nachteilige Auswirkungen von Störungen im Telegrammübertragungsnetz möglichst klein zu halten. Insbesondere soll es dabei möglich sein, den Ort von insbesondere kurzzeitigen Störungen zu lokalisieren. Das Verfahren und die Schaltungsanordnung soll vorzugsweise für eine besonders sichere In-Betrieb-Überwachung von Nachrichten-, vorzugsweise Digitalsignal-Übertragungsstrecken, geeignet sein.

Das erfindungsgemäße Verfahren sieht zur Lösung dieser Aufgabe die im kennzeichnenden Teil des Patentanspruchs 1 angegebene Verfahrensschritte vor.

Das erfindungsgemäße Verfahren gestattet es, eine wiederholte Weitergabe gestörter Telegramme zu verhindern, ohne daß die Zykluszeit bei Normalbetrieb vergrößert wird.

Vorteilhafte Weiterbildungen des Verfahrens sowie zweckmäßige Schaltungsanordnungen zur Durchführung des Verfahrens gehen aus den abhängigen Patentansprüchen hervor.

Bei dem in Anspruch 1 angegebenen Verfahren wechseln die Abfragetelegramme und Antworttelegramme insbesondere einander ab. Die Überführung vom zweiten Übertragungsmodus in den ersten Übertragungsmodus kann automatisch nach einer vorgegebenen Zeit oder bei jedem nächsten korrekten Aufruf ausgelöst werden.

Bei dem Verfahren nach Anspruch 4 kann die Umsteuerung jeweils durch einen Steuerbefehl oder durch Telegramme an sich erfolgen.

Die Erfindung wird anhand der in den Figuren dargestellten Ausführungsbeispiele näher erläutert.

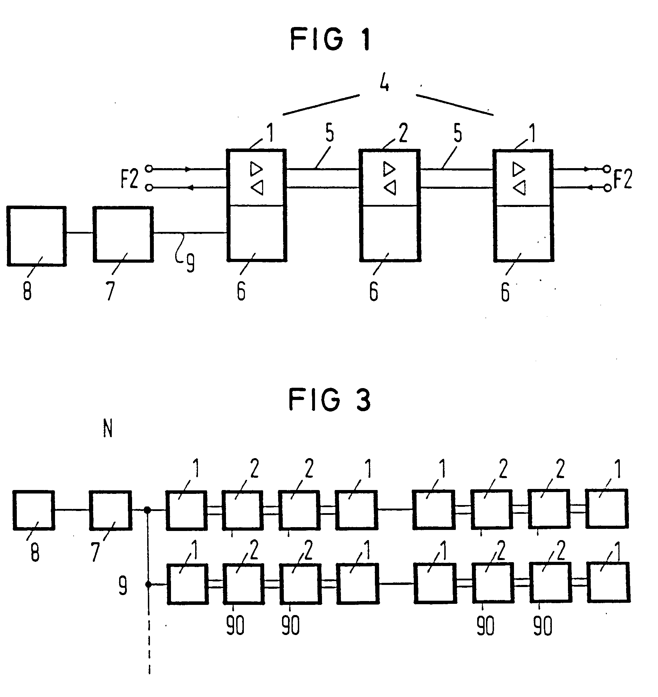

Die Figuren zeigen Einrichtungen zur In-Betrieb-Überwachung von Nachrichtenübertragungseinrichtungen, und zwar
- Fig. 1: mit einem Digitalsignal-Grundleitungsabschnitt,
- Fig. 2: mit einem aus drei Digitalsignal-Grundleitungsabschnitten bestehenden Liniennetz,
- Fig. 3: mit einem mehrere parallele Linien enthaltenden Sternnetz,
- Fig. 4: mit einem verzweigten Sternnetz.
Ferner Zeigen
- Fig. 5: ein Blockschaltbild einer Prozessoreinheit mit einem Busanschluß
- Fig. 6: eine entsprechend Fig. 5 aufgebaute Prozessoreinheit, jedoch ohne Busanschluß,
Leitungsendgeräte, Zwischenregeneratoren und Lichtwellenleiter sind die Grundelemente der in Fig. 1 gezeigten Digitalsignal-Übertragungsstrecke, deren Funktionsfähigkeit und Übertragungseigenschaften mit Hilfe von Geräten einer Einrichtung Zur In-Betrieb-Überwachung, bestehend aus dem Ortungsmodul 7, dem Personalcomputer 8 und den In-Betrieb-Überwachungs-Prozessoreinheiten im folgenden als Prozessoreinheiten 6 bezeichnet, kontrolliert werden.

Das Ortungsmodul kann entfallen, wenn die Prozessoreinheiten 6 so ausgeführt werden, daß sie als Master oder als Slave geschaltet werden können. Dann muß eine Prozessoreinheit 6 als Master geschaltet werden und die Aufgaben des Ortungsmoduls übernehmen und die restlichen Prozessoreinheiten müssen als Slaves gestaltet werden.

Die kleinste Einheit einer Digitalsignal-Übertragungsstrecke ist ein Digitalsignal-Grundleitungsabschnitt, im folgenden als Leitungsabschnitt 4 bezeichnet. Bei der Übertragungseinrichtung nach Fig. 1 besteht der Leitungsabschnitt aus zwei Leitungsendgeräten 1 und einem oder mehreren bei Bedarf in die Strecke eingefügten Zwischenregeneratoren 2.

In jedes Leitungsendgerät 1 und in jeden Zwischenregenerator 2 ist eine Prozessoreinheit 6 eingesetzt, die jeweils über einen internen Bus die Überwachungsdaten von dem zu überwachenden Hauptsystem erhält.

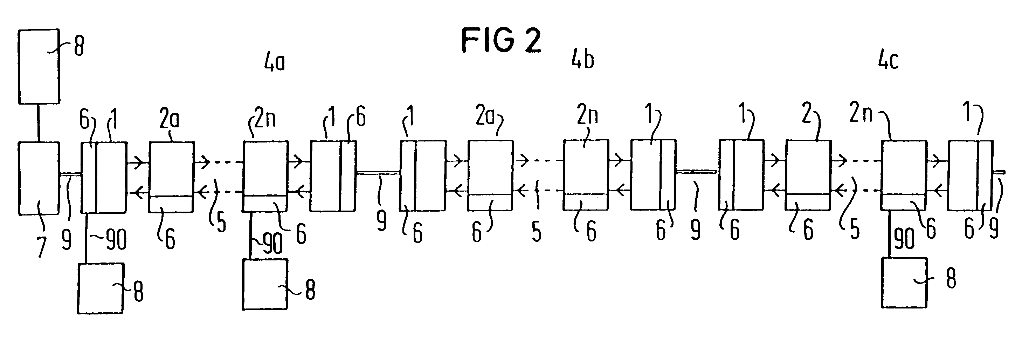

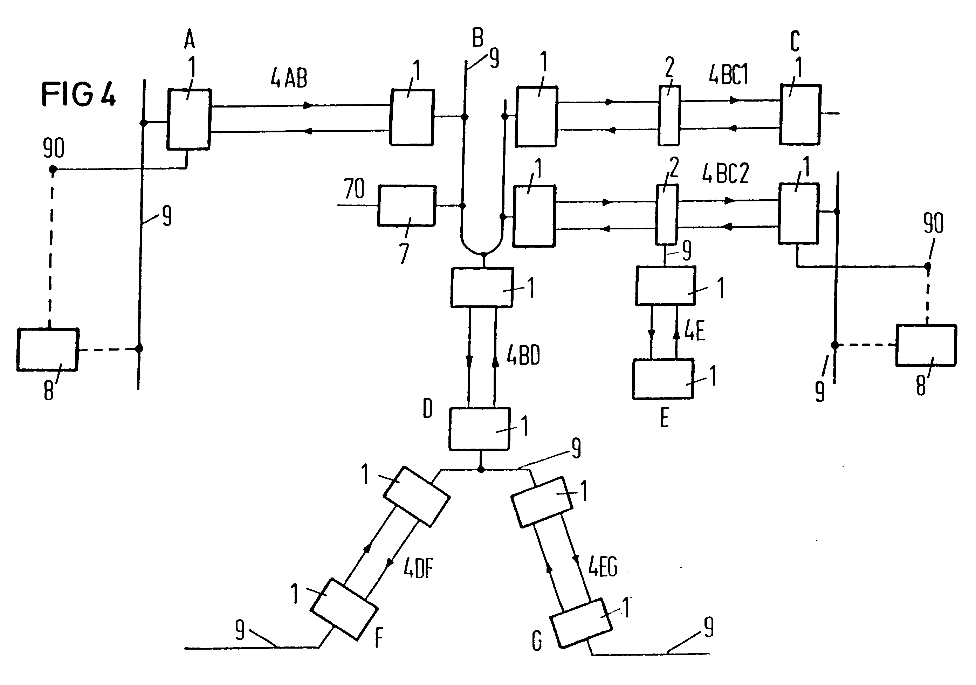

Der Ortungsbereich kann je nach Anforderungen aus folgenden Strukturen bestehen:
- aus einer Linie, die entsprechend Fig. 1 bzw. Fig. 2 aus einem oder mehreren in Kette geschalteten Leitungsabschnitten besteht,
- entsprechend Fig. 3 aus einem Netz mit mehreren parallelen Linien,
- nach Fig. 4 aus einem mit Abzweigungen versehenen Sternnetz.

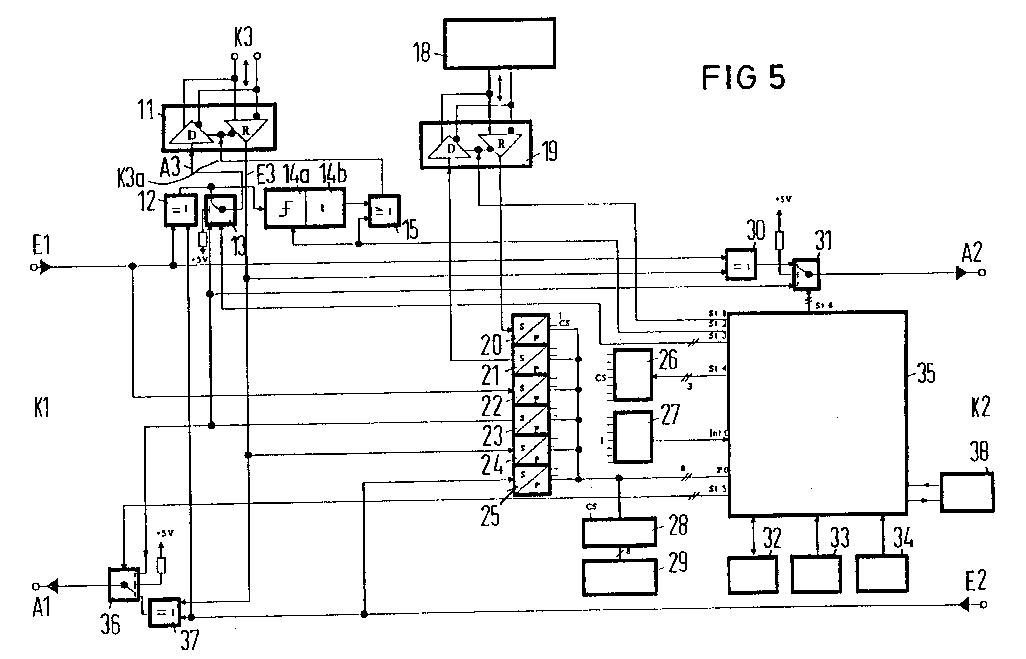

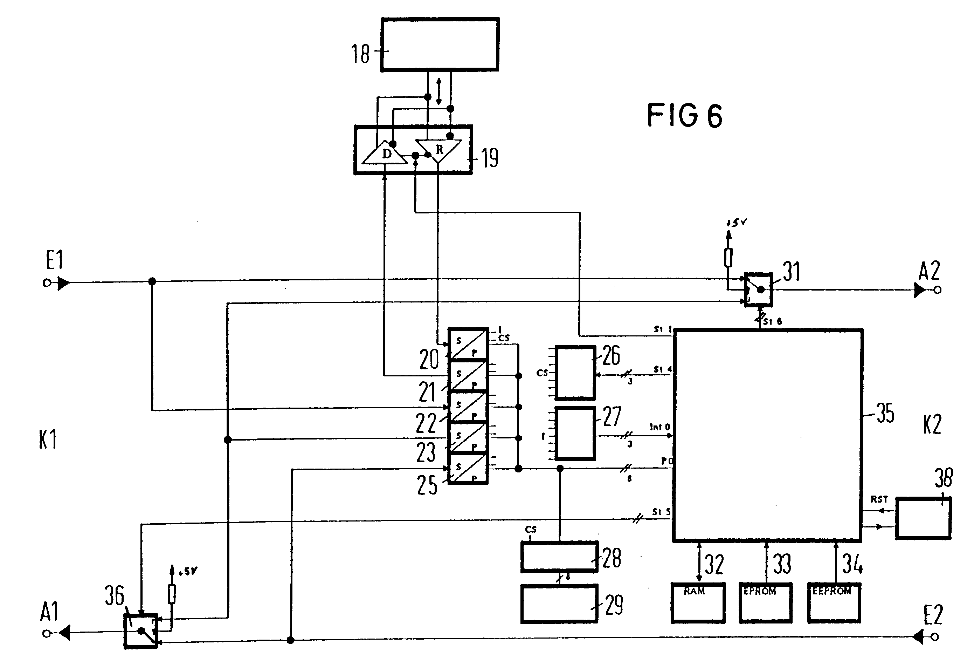

Jede Prozessoreinheit 6 wird durch einen Mikroprozessor gesteuert und ist entsprechend den Figuren 5 bis 6 aufgebaut. Sie hat im Leitungsendgerät 1 einen Anschluß K2 und im Zwischenregenerator 2 zwei Anschlüsse K1 und K2 - je einen für beide Richtungen - zur Ein- und Auskopplung in einen dem Nutzsignal überlagerten Hilfskanal. Zusätzlich kann ein Anschluß K3 bzw. K3a für einen Netzknoten vorgesehen sein.

Je nach Anwendungsfall findet der Anschluß K3a mit Zwei unidirektionalen oder der Anschluß K3 mit einer bidirektionalen Schnittstelle Verwendung.

Die Daten der Prozessoreinheiten 6 werden jeweils innerhalb eines Leitungsabschnitts 4 über die Anschlüsse K1, K2 ausgekoppelt und in einem Hilfskanal übertragen, der vorzugsweise dem Nutzsignal überlagert ist.

Innerhalb einer Linie werden die Daten der Prozessoreinheiten 6 von Leitungsendgerät 1 zu Leitungsendgerät 1, über die vierdrähtigen Anschlüsse K1, K2 in den Hilfskanal ein- und ausgekoppelt und gegebenenfalls von einem Leitungsabschnitt 4a zum nächsten Leitungsabschnitt 4b über die Anschlüsse K3 bzw. K3a übertragen.

Bei der in Fig. 2 gezeigten Anordnung sind die Leitungsabschnitte 4a...4c in Kette geschaltet. In einer der beiden Endstellen der Kettenschaltung ist an die Prozessoreinheit 6 des Leitungsendgerätes 1 das Ortungsmodul 7 angeschlossen. An dieses Ortungsmodul 7 ist ein Personalcomputer 8 angeschlossen. Weitere Personalcomputer 8 sind unmittelbar an die Prozessoreinheit 6 des ersten Leitungsendgerätes 1 und an Zwei der Zwischenregeneratoren 2n angeschlossen.

Innerhalb der Leitungsabschnitte 4a...4c werden Nutzsignale von Leitungsendgerät 1 zu Leitungsendgerät 1 übertragen. Die Daten der Prozessoreinheiten 6 werden innerhalb der Leitungsabschnitte 4a...4c jeweils über einen Hilfskanal und zwischen den Leitungsabschnitten 4a...4c jeweils über einen ISM-Bus (In-Service-Monitoring-Bus) 9 mit der Schnittstelle RS 485 (Anschluß K3 der Prozessoreinheit) übertragen.

Alle Prozessoreinheiten 6 haben zusätzlich einen Anschluß 90, insbesondere mit der Schnittstelle RS 232 C, an den ein Personalcomputer 8 angeschlossen werden kann. Von dieser Möglichkeit ist bei einem Leitungsendgerät und bei zwei Zwischenregeneratoren Gebrauch gemacht.

Fig. 3 zeigt zwei von mehreren am Netzknoten N (Abzweig) endenden Linien.

Am Netzknoten N sind die Prozessoreinheiten der Leitungsendgeräte 1 und das Ortungsmodul 7 über den ISM-Bus 9 miteinander verbunden.

Nach Fig. 4 sind die Orte A bis G über ein verzweigtes Sternnetz miteinander verbunden. Zwischen den Orten A und B sind ein Leitungsabschnitt 4AB ohne Zwischenregenerator, zwischen den Orten B und C zwei Leitungsabschnitte 4BC1, 4BC2 mit je einem Zwischenregenerator 2, zwischen dem Ort B und dem Ort D ein Leitungsabschnitt 4BD und zwischen dem Ort D und F und D und G jeweils ein Leitungsabschnitt 4DF und 4GE vorgesehen. Außerdem ist der Ort E über einen Leitungsabschnitt 4E mit dem Zwischenregenerator 2 des Leitungsabschnittes 4BC2 verbunden.

An den Orten A und C ist jeweils ein Personalcomputer 8 an die Prozessoreinheit des Leitungsendgerätes 1 angeschlossen. Der Personalcomputer 8 kann dabei wahlweise an den ISM-Bus 9 mit der Schnittstelle RS 485 oder an einen zusätzlichen Anschluß der Prozessoreinheit mit der Schnittstelle RS 232 C erfolgen. Am ISM-Bus 9 am Ort D ist zusätzlich zu den Leitungsendgeräten 1 der dort endenden Leitungsabschnitte das Ortungsmodul 7 angeschlossen, das mit einer Einrichtung zur Pollingsteuerung versehen ist. Das Ortungsmodul 7 hat zusätzlich einen Anschluß 70 zum Anschluß einer Signalsammeleinrichtung, über den die Überwachungsdaten des Sternnetzes vom Ortungsmodul 7 durch die Signalsammeleinrichtung abgerufen werden können.

Bei einem Abzweig werden die Daten der Prozessoreinheit 6 zwischen den Leitungsendgeräten 1 über die Anschlüsse K3 bzw. K3a und über einen Netzknoten übertragen.

Bei den Netzen nach den Figuren 1 bis 4 ist an einem der Netzknoten oder an einer der Prozessoreinheiten eine Vorrichtung zur Ablaufsteuerung, insbesondere ein Ortungsmodul 7 und/oder ein Personalcomputer 8 angeschlossen. Das Ortungsmodul 7 oder ein Personalcomputer 8 ruft die einzelnen Prozessoreinheiten 6 nacheinander per Aufruftelegramm mit ihren Adressen auf, erhält deren Überwachungsdaten per Antworttelegramm und wertet diese aus.

In dem der folgenden Beschreibung zugrundegelegten Verfahren zur In-Betrieb-Überwachung werden die Ortungstelegramme asynchron mit einem Standardprotokoll nach IEC TC57 übertragen. Zur Übertragung sind auch andere Protokolle wie CCITT X25 (HDLC) möglich. Das Ortungsmodul fragt in der Masterfunktion die Prozessoreinheiten des gesamten Netzes ab.

Im Normalbetrieb, d.h. im fehlerfreien Zustand werden alle Telegramme in den einzelnen Geräten, gebildet durch Leitungsendgeräte und Zwischenregeneratoren, ohne Zwischenspeicherung vom Eingang zum Ausgang durchgeschaltet. Damit wird ein kurzer Abfragezyklus für ein ausgedehntes Netz erreicht. Die durchlaufenden Telegramme werden jedoch in jeder der für die In-Betrieb-Überwachung vorgesehene Prozessoreinheit eines jeden Leitungsendgerätes bzw. Zwischenregenerators durch Mithören auf Fehler und Störungen des regulären Ablaufs hin untersucht. Wird von der Prozessoreinheit eines Leitungsendgerätes bzw. Zwischenregenerators ein fehlerhaftes Telegramm erkannt, so geht der Prozessor dieses Gerätes nach Beendigung des Telegramms für die betreffende Richtung in den gesicherten Betrieb.

Eine erste Verfahrensvariante hat folgenden Ablauf: Da keine Regeneration der Telegramme erfolgt, tritt der Fehler auch bei allen nachfolgenden Geräten auf. Diese gehen somit ebenfalls in den gesicherten Betrieb. Dies bedeutet, daß alle ankommenden Telegramme in dieser Übertragungsrichtung ab dem ersten gestörten Regenerationsabschnitt in den Prozessoreinheiten zwischengespeichert, auf Fehler untersucht und nur fehlerfreie Telegramme zum Ausgang durchgeschaltet werden.

Als Fehlerkriterien können hierbei dienen:
- Parity über ein Zeichen
- Checksumme über die Anwenderdaten
- Übereinstimmung der beiden Längenangaben in den L-Feldern
- Übereinstimmung der Längenangabe mit der tatsächlichen Länge
- korrektes Start- und Stopzeichen
- Permanentes Aussenden von formal korrekten Telegrammen durch einen fehlerhaften Sender
- Erzeugen einer Break-Bedingung (= Dauer low) auf dem In-Betrieb-Überwachungs-Kanal
- Prüfung mit zyklischem Sicherungscode (cyclic redundancy check)
Jedes Leitungsendgerät bzw. jeder Zwischenregenerator, das bzw. der in den gesicherten Betrieb übergegangen ist, sendet ein Telegramm in beide Richtungen, das die Kennung "gesicherter Betrieb" enthält. Ist ein Gerät beim Empfang dieses Telegramms bereits im gesicherten Betrieb, und hat es sein Telegramm, das den Übergang in den gesicherten Betrieb anzeigt, bereits ausgesandt, so gibt es das ankommende Telegramm nicht weiter.

Der Master, insbesondere ein Ortungsmodul, schaltet nach Empfang eines Telegramms mit der Kennung "gesicherter Betrieb" sofort auf den Suchaufrufzyklus um. In dieser Betriebsart ruft der Master - falls sich das Gerät im gesicherten Betrieb befunden hat - ausgehend vom Ortungsmodul nacheinander die Geräte (Leitungsendgeräte bzw. Zwischenregeneratoren) auf und entsichert diese. Die einzelnen Geräte teilen in ihren Antworttelegrammen mit, ob sie sich im gesicherten Betrieb befunden haben.

Zur Feststellung des Fehlerortes sind zwei Fälle zu unterscheiden.

Sind, beginnend beim Ortungsmodul bis zu einem bestimmten Punkt der Strecke, alle Geräte im gesicherten Betrieb gewesen, so liegt der Fehlerort in dem Regenerationsabschnitt nach dem Gerät, das sich als letztes im gesicherten Betrieb befunden hat. Es liegt somit ein Fehler in der Rückrichtung der Strecke vor.

Sind, beginnend beim Ortungsmodul, erst ab einem bestimmten Punkt der Strecke Geräte im gesicherten Betrieb, so liegt der Fehlerort im Regenerationsabschnitt vor dem Gerät, das sich als erstes im gesicherten Betrieb befand. Es liegt somit ein Fehler in der Hin-Richtung der Strecke vor.

Der Suchaufrufzyklus läuft mit der gleichen Geschwindigkeit ab wie der gewöhnliche Aufrufzyklus, da die angesprochenen Geräte, beginnend beim ersten nach dem Ortungsmodul jeweils entsichert werden und damit die Zwischenspeicherung der Telegramme wieder entfällt. Ein wesentlicher Vorteil des Verfahrens liegt darin, daß in der Betriebsart "gesicherter Betrieb" nur korrekte Telegramme weitergeleitet werden. Es kann damit auch im Fehlerfall zu keiner Datenkollision, nicht eindeutigen oder verstümmelten Telegrammen kommen.

Bei einer zweiten Verfahrensvariante ruft das Ortungsmodul 7 im gesicherten Betrieb die einzelnen Leitungsendgeräte 1 und Zwischenregeneratoren 2 nacheinander mit ihrer Adresse auf (Aufruftelegramm) und empfängt anschließend ein Antworttelegramm mit den ISM(In-Service-Monitoring) Meldeinhalten.

Im fehlerlosen Zustand werden alle an einem Leitungsendgerät bzw. Zwischenregenerator ankommenden Aufruf- und Antworttelegramme ohne Zwischenspeicherung zum Ausgang durchgeschaltet, um die Zeit für einen Pollingzyklus möglichst kurz zu halten. Die durchlaufenden Telegramme werden jedoch in der Prozessoreinheit 6 jedes Leitungsendgerätes 1 bzw. Zwischenregenerators 2 auf Fehler und Störungen des regulären Ablaufs kontrolliert. Wird von der Prozessoreinheit 6 eines Leitungsendgerätes 1 bzw. Zwischenregenerators 2 in einem der durchlaufenden Telegramme nachträglich ein Fehler erkannt, so geht die Prozessoreinheit dieses Gerätes und auch alle Prozessoreinheiten in den nachfolgenden Geräten für diese Richtung in den Übertragungsmodus "gesicherter Betrieb". Dies bedeutet, daß alle ankommenden Telegramme in dieser Übertragungsrichtung ab dem ersten gestörten Regenerationsabschnitt in den Prozessoreinheiten zwischengespeichert, auf Fehler untersucht und nur fehlerfreie Telegramme zum jeweiligen Ausgang durchgeschaltet werden.

Fehlerkriterien sind beispielsweise:
- Parity und Blockcheck müssen in Ordnung sein.
- Länge des Telegramms muß mit der Längenangabe im L-Feld des Telegrammkopfes übereinstimmen.

Der Übertragungsmodus "Gesicherter Betrieb" kann in jedem Gerät per Steuerbefehl vom Ortungsmodul/Personalcomputer ein- und ausgeschaltet werden.

Der Übertragungsmodus "gesicherter Betrieb" und die dazugehörende Übertragungsrichtung wird im Antworttelegramm dem pollenden Ortungsmodul/Personalcomputer gemeldet.

Wegen der im gesicherten Betrieb notwendigen Zwischenspeicherung der Telegramme in den Prozessoreinheiten jedes Leitungsendgerät/Zwischenregenerator dauert ein Pollzyklus in diesem Modus Wesentlich länger als im Normalbetrieb.

Um die Zeit für einen Pollzyklus auch bei Störungen möglichst kurz zu halten, wird folgender Ablauf vorgeschlagen:
Das Ortungsmodul beginnt nach Eingang der Information, daß ein Gerät in den "Gesicherten Betrieb" geschaltet hat, sofort mit einem neuen Pollzyklus. Bei diesem Pollzyklus beginnt das Ortungsmodul mit dem Aufruf des ihm am nächsten liegenden Gerätes und schaltet dieses per Steuerbefehl wieder in den Normalbetrieb um. Anschließend wird das dahinter liegende Gerät aufgerufen und ebenso in den Normalbetrieb umgeschaltet. Dieser Vorgang wird fortgesetzt bis das letzte Gerät einer Linie aufgerufen worden ist. Auf diese Weise wird erreicht, daß beim Aufruf eines Gerätes alle zwischen Ortungsmodul und dem aufgerufenen Gerät liegenden Geräte in den Normalbetrieb umgeschaltet sind.

Der Pollingzyklus mit Umschaltung in den Normalbetrieb dauert daher nicht länger als ein Pollingzyklus mit Geräten, die im Normalbetrieb laufen.

Da bei einer Störung aller Geräte hinter dem Störungsort (in Übertragungsrichtung) in den "Gesicherten Betrieb" gehen, ist auch der Ort der Störung eindeutig festzustellen.

Mit diesem Verfahren können daher auch sporadisch auftretende Fehler im ISM-Kanal sicher geortet werden.

Wenn ein Aufruftelegramm gestört ist und dadurch die vorgegebenen Anforderungen nicht einhält, sendet keine Prozessoreinheit Baugruppe ein Antworttelegramm. Bei Dauerstörungen senden daher nur die vor dem Störungsort befindlichen Prozessoreinheit ein Antworttelegramm.

Wenn ein Antworttelegramm gestört ist und dadurch die vorgegebenen Anforderungen nicht einhält, wird dies durch das Ortungsmodul/ den Personalcomputer erkannt. Bei Dauerstörungen empfängt das Ortungsmodul/ der Personalcomputer nur korrekte Antworttelegramme von Prozessoreinheiten, die sich vor dem Störungsort befinden.

Dadurch kann auch bei Dauerstörungen der Störungsort festgestellt werden.

Die Prozessoreinheit kann zwischen zwei Hoden für die Übertragung der Telegramme umgeschaltet werden.
1. Normalbetrieb: Alle an den Schnittstellen ankommenden Telegramme werden sofort an die nächsten Streckengeräte weitergegeben und parallel vom Mikroprozessor auf ihren Inhalt hin überprüft.
2. Speicherbetrieb: Alle an den Schnittstellen ankommenden Telegramme werden erst vom Mikroprozessor auf ihren Inhalt hin überprüft, bevor sie an die nächsten Streckengeräte weitergegeben werden.

Die in Fig. 5 gezeigte Prozessoreinheit hat einen Eingang E1 und Ausgang A1 zum Anschluß eines ersten vierdrähtigen Datenkanals zur Übertragung Von Telegrammen, einen Eingang E2 und Ausgang A2 zum Anschluß eines zweiten vierdrähtigen Datenkanals und einen dritten Eingang E3 und Ausgang A3 zum Anschluß eines dritten vierdrähtigen Datenkanals.

Jeder der drei Ausgänge A1, A2 und A3 läßt sich über einen durch den Mikroprozessor steuerbaren Umschalter 36, 31 bzw. 13 wahlweise an den Ausgang eines Exklusiv-ODER-Gliedes 37, 30 bzw. 12 oder an den Ausgang eines Parallel-Serien-Wandlers 23 anschließen. Dieser Parallel-Serien-Wandler 23 ist mit seinem Paralleleingang an den Port PO des Mikroprozessors 35 angeschlossen. Dabei wird der Umschalter 36 über die zweiadrige Steuerleitung St5, der Umschalter 13 über die zweiadrige Steuerleitung St3 und der Umschalter 31 über die zweiadrige Steuerleitung St6 vom Mikroprozessor 35 gesteuert.

Die Exclusiv-ODER-Glieder 12, 30 und 37, die jeweils zu einem Ausgang eines der drei Vierdrahtanschlüsse führen, verknüpfen die an den Eingängen der beiden anderen Vierdrahtanschlüsse ankommenden Daten.

Die Serien-Parallel-Wandler 20, 22, 24 und 25 sowie die Parallel-Serien-Wandler 21 und 23 sind in UART-Bausteinen oder in HDLC-Bausteinen enthalten. Die Serien-Parallel- bzw. Parallel-Serien-Wandler 20 bis 25 sind über einen 8-bit-Parallel-Bus an den Port PO des Mikroprozessors 35 angeschlossen und werden durch den mit dem Mikroprozessor 35 verbundenen Chip-Select-Baustein 26 ausgewählt. Durch den ebenfalls an den Mikroprozessor 35 angeschlossenen Interrupt-Baustein 27 unterbrechen sie bei Bedarf das Programm des Mikroprozessors.

An den Port PO des Mikroprozessors 35 ist außerdem der Kodierschalter 29 über den Schalter 28 angeschlossen, mit dessen Hilfe die Prozessoreinheit auf eine Adresse eingestellt werden kann.

An den Mikroprozessor 35 sind außerdem noch das als Datenspeicher dienende RAM 32, das als Programmspeicher dienende EPROM 33, das als nicht flüchtiger Datenspeicher dienende EEPROM 34 und der Baustein 38 zur Eigenüberwachung angeschlossen.

Der Ausgang des Exklusiv-ODER-Gliedes 12 ist über die Vorrichtung 14a zur Flankenerkennung und die dieser in Kette geschaltete Vorrichtung 14b an den einen Eingang des ODER-Gliedes 15 geführt. Der andere Eingang des ODER-Gliedes 15 ist zusammen mit einem Steuereingang der Einrichtungen 14a und 14b an die vom Mikroprozessor 35 kommende Steuerleitung St2 angeschlossen.

Zwischen dem Vierdraht-Anschlußpaar E3, A3 und dem Busanschluß K3 zum Anschluß eines bidirektionalen Busses liegt der Sende-Empfangs-Baustein 11. Der Steuereingang dieses Sende- und Empfangs-Bausteins 11, über den sich wahlweise der Sender D oder der Empfänger R aktivieren läßt, ist an den Ausgang des ODER-Gliedes 15 angeschlossen.

Im Normalbetrieb werden die Telegramme vom Dateneingang E1 oder E3 über das Exklusiv-ODER-Glied 30 und den Schalter 31 direkt zum Ausgang A2 weitergegeben. Vom Eingang E2 oder E3 gelangan die Telegramme über das Exklusiv-ODER-Glied 37 und den Schalter 36 zum Ausgang A1.

Das Exklusiv-ODER-Glied 12 bzw. 30, bzw. 37 sorgt dafür, daß keine Daten übertragen werden, wenn Daten gleichzeitig an den Eingängen E1 und E2 bzw. E1 und E3 bzw. E2 und E3 ankommen.

Da bei fehlerfreiem Betrieb keine Daten gleichzeitig am Eingang E1, E2 und E3 ankommen dürfen, werden durch die Exklusiv-ODER-Glieder 12, 37 und 30 Daten nur im Fehlerfall gesperrt.

Daten, die am Eingang E1 oder E2 ankommen, können auch über das Exklusiv-ODER-Glied 12 und den Schalter 13 an den Sender D des Sende-Empfangs-Bausteins 11 und von diesem an den Busanschluß K3 gelangen. Hierzu muß sich der Schalter 13 in der gezeigten Normalstellung befinden und der Sender D aktiviert sein. Dies ist dann der Fall, wenn die Vorrichtung 14a eine Anstiegsflanke erkennt und das Oder-Glied 15 über die Vorrichtung 14b und/oder über die Steuerleitung St2 ein entsprechendes Steuerpotential erhält.

Werden im Normalbetrieb Daten über das Exklusiv-ODER-Glied 12 zum Busanschluß K3 geleitet, so werden diese Daten auch in die Vorrichtung 14a zur Flankenerkennung eingespeist. Erkennt die Vorrichtung 14a zur Flankenerkennung die Anstiegsflanke des ersten Bit eines Telegramms, so startet sie die Zeitschaltung 14b. Diese Zeitschaltung gibt einen Ausgangsimpuls ab, der unabhängig von der Bitfolge ist, die am Eingang der Vorrichtung 14a zur Flankenerkennung ankommt. Der Ausgangsimpuls gelangt über das ODER-Glied 15 zum Sende-Empfangs-Baustein 11 und schaltet sofort den Treiberbaustein D ein und den Empfangs-Baustein R aus. Daten, die an einem der Eingänge E1 oder E2 der Prozessoreinheit ankommen, werden so durch das Erkennen einer ansteigenden Flanke sofort an den Busanschluß K3 weitergegeben.

Gleichzeitig werden die Daten dem Mikroprozessor 35 zur Verarbeitung übertragen. Daten, die am Eingang E1 ankommen, gelangen über den Serien-Parallel-Wandler 22 zum Mikroprozessor 35, Daten vom Eingang E2 über den Serien-Parallel-Wandler 25 und Daten vom Eingang E3 über den Serien-Parallel-Wandler 24 zum Mikroprozessor 35. Die Serien-Parallel-Wandler 22, 24 und 25 nehmen die Daten byteweise auf und geben immer dann einen Interrupt-Impuls an den Mikroprozessor 35 ab, wenn sie ein Byte geladen haben, um es an den Port PO des Mikroprozessors 35 abzugeben. Stellt der Mikroprozessor 35 fest, daß die Daten vorgegebene Forderungen erfüllen, dann aktiviert er die Steuerleitung St2. Hierdurch schaltet der Mikroprozessor 35 über das ODER-Glied 15 den Treiber-Baustein D des Interface-Bausteins 11 ein.

Stellt der Mikroprozessor 35 bei der Auswertung eines Telegrammes fest, daß vorgegebene Anforderungen nicht erfüllt wurden, so veranlaßt er die Prozessor-Einheit, in einen Speicherbetrieb überzugehen. Im Speicherbetrieb aktiviert der Mikroprozessor 35 zwei von den drei Steuerleitungen St3, St5 und St6. Zwei von den drei Schaltern 13, 31 und 36 schalten daher um, so daß alle Daten, die der Parallel-Serien Wandler 23 abgibt, an zwei von den drei Ausgängen A1, A2, K3 gelangen, aus deren Richtung das Telegramm nicht empfangen wurde.

Die am Eingang E1 ankommenden Daten werden im Serien-Parallel-Wandler 21, die am Eingang E2 ankommenden Daten im Serien-Parallel-Wandler 25 verarbeitet. Der Mikroprozessor 35 erkennt also, aus welcher Richtung die Daten kommen. Im Speicherbetrieb werden daher die Steuerleitungen St6 und die Steuerleitungen St5 so aktiviert, daß der Ausgang A1 oder A2 über den nicht gesendet wird, über den Schalter 31 oder 36 und den Pull-up-Widerstand auf High-Potential gelegt wird.

Der Signalsammler 18 ist über den Interface-Baustein 19 und den Serien-Parallel-Wandler 20 und den Parallel-Serien-Wandler 21 an den Mikroprozessor 35 angeschlossen. Der Signalsammler 18 liefert die Überwachungsdaten der überwachten Zwischenstelle und erhält gegebenenfalls die im Aufruftelegramm enthaltenen Steuerinformationen zur Weitergabe an eine nicht dargestellte Signal-Sammeleinrichtung. Die Überwachungsdaten der überwachten Zwischenstelle werden vom Prozessor 35 über den Parallel-Serien-Wandler 22, über die Umschalter 13, 31, 36 und über die Ausgänge A1, A2, A3 in alle drei Richtungen K1, K2 und K3 gesendet. Sind an einem Netzknoten mehrere Anschlüsse K3 über einem bidirektionalen Bus miteinander verbunden, so ergibt sich folgender Ablauf für das Ein- und Ausschalten eines Bustreibers:
Im Ruhezustand sind alle Treiber inaktiv und haben einen hochohmigen Ausgang. Wenn am Anschluß K1 oder K2 Daten ankommen, wird durch die Flanke des Startbits das Zeitglied 14b gestartet, das den Treiber für mindestens zwei Zeichen aktiviert. Das weitere Halten und Ausschalten übernimmt dann der Mikrocomputer 35, dem die Daten parallel zugeführt wurden.

## Patentansprüche

1. Verfahren zur Steuerung und/oder Überwachung, bei dem wenigstens eine Überwachungseinheit (7, 8) mit Prozessoreinheiten (6), die über ein gemeinsames Telegrammübertragungsnetz an die Überwachungseinheit (7, 8) angeschlossen und mit Adressen versehen sind, Informationen austauscht, wobei Abfragetelegramme der Überwachungseinheit (7, 8) und Antworttelegramme der Prozessoreinheiten (6) übertragen werden,
**dadurch gekennzeichnet,**
daß bei wenigstens einem Teil der Prozessoreinheiten (6) wenigstens Telegramme einer Übertragungsrichtung über eine Übertragungseinheit geführt sind, die die Telegramme in einem ersten Übertragungsmodus ohne Zwischenspeicherung durchschaltet und in einem zweiten Übertragungsmodus erst nach Zwischenspeicherung und Prüfung nur bei festgestellter Erfüllung vorgegebener Anforderungen weitergibt und daß jeweils vom ersten auf den zweiten Übertragungsmodus umgeschaltet wird, sobald die Prüfung in der betreffenden Prozessoreinheit (6) ergibt, daß ein durchgeschaltetes Telegramm die vorgegebenen Anforderungen nicht erfüllte.

2. Verfahren nach Ansrpuch 1,
**dadurch gekennzeichnet,**
daß der Übergang der Prozessoreinheiten (6) vom zweiten auf den ersten Übertragungsmodus jeweils durch einen Steuerbefehl der Überwachungseinheit (7, 8) ausgelöst wird.

3. Verfahren nach Anspruch 1 oder 2,
**dadurch gekennzeichnet,**
daß die Prozessoreinheiten (6), die in den zweiten Übertragungsmodus übergegangen sind, in dem auf die Umschaltung folgenden Antworttelegramm den neuen Zustand und die dazugehörende Übertragungsrichtung an die Überwachungseinheit (7, 8) melden.

4. Verfahren nach Anspruch 3,
**dadurch gekennzeichnet,**
daß die Überwachungseinheit (7, 8) im Anschluß an eine Meldung, daß eine Prozessoreinheit (6) in den zweiten Übertragungsmodus übergegangen ist, die Prozessoreinheiten (6) beginnend mit der der Überwachungseinheit nächstgelegenen Prozessoreinheit zyklisch aufruft und dabei die sich im zweiten Übertragungsmodus befindlichen Prozessoreinheiten (6) jeweils vom zweiten Übertragungsmodus in den ersten Übertragungsmodus umsteuert.

5. Verfahren nach einem der Ansprüche 1 bis 4,
**dadurch gekennzeichnet,**
daß die Überwachungseinheit (7, 8) als Fehlerortungsvorrichtung und/oder In-Betrieb-Überwachungsvorrichtung mit Prozessoreinheiten (6) Informationen austauscht, die End- oder Zwischenstellen einer Nachrichtenübertragungseinrichtung zugeordnet sind.

6. Schaltungsanordnung zur Steuerung und/oder Überwachung, mit wenigstens einer Überwachungseinheit (7, 8) und mit Prozessoreinheiten (6), die über ein gemeinsames Telegrammübertragungsnetz an die Überwachungseinheit (7, 8) angeschlossen und mit Adressen versehen sind, wobei die Überwachungseinheit (7, 8) eine Vorrichtung zum Aussenden von Abfragetelegrammen und die Prozessoreinheiten (6) jeweils eine Vorrichtung zum Aussenden von Antworttelegrammen aufweisen, zur Durchführung des Verfahrens nach Anspruch 1,
**dadurch gekennzeichnet,**
daß wenigstens ein Teil der Prozessoreinheiten (6) wenigstens für eine Übertragungsrichtung (6) jeweils eine einen Umschalter (31, 36) enthaltende Übertragungsvorrichtung (30, 31; 32; 37, 36; 22...24, 35) und eine mit einem Zwischenspeicher (32) versehene Auswertevorrichtung (35) zum Auswerten empfangener Telegramme enthält und daß der Umschalter (31, 36) durch die Auswertevorrichtung (35) jeweils derart steuerbar ist, daß der Ausgang (A1, A2) der Umschaltevorrichtung (31, 36) in einem ersten Übertragungsmodus über den Umschalter (31, 36) mit dem Eingang (E2, E1) der Übertragungseinheit und in einem zweiten Übertragungsmodus nur bei festgestellter Erfüllung vorgegebener Anforderungen mit einem Ausgang des Zwischenspeichers (32) verbunden ist.

7. Schaltungsanordnung nach Anspruch 6,
**dadurch gekennzeichnet,**
daß der Steuereingang des Umschalters an einen Steuerausgang der Auswertevorrichtung angeschlossen ist, die bei festgestellter Nichterfüllung der vorgegebenen Anforderungen ein erstes Steuersignal für den ersten Übertragungsmodus und bei Empfang eines einen Rückschaltbefehl enthaltenden Telegramms der Überwachungseinheit ein zweites Steuersignal für den zweiten Übertragungsmodus abgibt.

8. Schaltungsanordnung nach Anspruch 6 oder 7,
**dadurch gekennzeichnet,**
daß die Schaltungsanordnung als Fehlerortungsvorrichtung und/oder In-Betrieb-Überwachungsvorrichtung für Übertragungsstrecken der Nachrichtenübertragungstechnik mit wenigstens einem jeweils zwischen zwei Leitungsendgeräten (1) angeordneten Übertragungsabschnitt (4) ausgebildet ist, der gegebenenfalls eine oder mehrere Zwischenstellen (2) enthalten kann und daß die Überwachungseinheit (7, 8) durch die Fehlerortungsvorrichtung und/oder In-Betrieb-Überwachungsvorrichtung gebildet ist und daß die Prozessoreinheiten (6) wenigstens einem Teil der Leitungsendgeräte (1) und/oder wenigstens einem Teil der Zwischenstellen (2) zugeordnet sind.

9. Schaltungsanordnung nach einem der Ansprüche 6 bis 8,
**dadurch gekennzeichnet,**
daß die Auswertevorrichtung einen Mikroprozessor (35) mit einem RAM (32) als Datenspeicher enthält.

## Claims

1. Process for controlling and/or monitoring, in which at least one monitoring unit (7, 8) exchanges information with processor units (6) that are connected to the monitoring unit (7, 8) via a common message transmission network and are provided with addresses, in which interrogation messages of the monitoring unit (7, 8) and reply messages of the processor units (6) are transmitted, characterised in that for at least some of the processor units (6), at least messages of one transmission direction are carried via a transmission unit that switches through the messages in a first transmission mode without buffering, and in a second transmission mode forwards them only after buffering and checking only if it is found that they have fulfilled predetermined conditions, and in that in each case a switch is made from the first to the second transmission mode as soon as the check in the respective processor unit (6) reveals that a switched-through message did not fulfil the predetermined conditions.

2. Process according to Claim 1, characterised in that the switchover of the processor units (6) from the second to the first transmission mode is triggered in each case by a control command of the monitoring unit (7, 8).

3. Process according to Claim 1 or 2, characterised in that the processor units (6) that have switched over into the second transmission mode report the new status and the associated transmission direction to the monitoring unit (7, 8) in the reply message following the switchover.

4. Process according to Claim 3, characterised in that, following a message that a processor unit (6) has switched over to the second transmission mode, the monitoring unit (7, 8) polls the processor units (6) cyclically, beginning with the processor unit closest to the monitoring unit, and thereby switches over the processor units (6) that are in the second transmission mode from the second transmission mode into the first transmission mode in each case.

5. Process according to one of Claims 1 to 4, characterised in that, as fault-locating device and/or in-service monitoring device, the monitoring unit (7, 8) exchanges information with processor units (6) which is assigned to terminal or intermediate stations of a communications device.

6. Circuit arrangement for controlling and/or monitoring, having at least one monitoring unit (7, 8) and having processor units (6) that are connected to the monitoring unit (7, 8) via a common message transmission network and are provided with addresses, in which the monitoring unit (7, 8) has a device for transmitting interrogation messages and the processor units (6) have in each case a device for transmitting reply messages, for implementing the process according to Claim 1, characterised in that at least some of the processor units (6) contain, at least for one transmission direction (6), in each case a transmission device (30, 31; 32; 37, 36; 22...24, 35) containing a changeover switch (31, 36) and an evaluation device (35) provided with a buffer (32) for evaluating received messages, and in that the changeover switch (31, 36) can be controlled by the evaluation device (35) in each case in such a way that the output (A1, A2) of the changeover device (31, 36) is connected to the input (E2, E1) of the transmission unit via the changeover switch (31, 36) in a first transmission mode, and is connected to an output of the buffer (32) in a second transmission mode only if it is found that predetermined conditions have been fulfilled.

7. Circuit arrangement according to Claim 6, characterised in that the control input of the changeover switch is connected to a control output of the evaluation device which, when it is found that the predetermined conditions have not been fulfilled, outputs a first control signal for the first transmission mode, and outputs a second control signal for the second transmission mode if a message of the monitoring unit containing a change-back command is received.

8. Circuit arrangement according to Claim 6 or 7, characterised in that the circuit arrangement is designed as a fault-locating device and/or in-service monitoring device for communication links having at least one transmission section (4) arranged between two line terminals (1) in each case, which section may contain one or more intermediate stations (2) if appropriate, and in that the monitoring unit (7, 8) is formed by the fault-locating device and/or in-service monitoring device, and in that the processor units (6) are assigned to at least some of the line terminals (1) and/or at least some of the intermediate stations (2).

9. Circuit arrangement according to one of Claims 6 to 8, characterised in that the evaluation device contains a microprocessor (35) with a RAM (32) as data memory.

## Revendications

1. Procédé de commande et/ou de contrôle, selon lequel au moins une unité de contrôle (7,8) échange des informations avec des unités à processeur (6), qui sont raccordées à l'unité de contrôle (7,8) par l'intermédiaire d'un réseau commun de transmission de télégrammes et sont pourvues d'adresses, avec transmission de télégrammes d'interrogation de l'unité de contrôle (7,8) et de télégrammes de réponse des unités à processeur (6), caractérisé par le fait que pour au moins une partie des unités à processeur (6), au moins des télégrammes circulant dans un sens de transmission passent par une unité de transmission, qui transmet les télégrammes, dans un premier mode de transmission, sans mémorisation intermédiaire, et les retransmet, dans un second mode de transmission, uniquement après mémorisation intermédiaire et contrôle, uniquement lorsque des exigences prédéterminées sont effectivement satisfaites, et qu'une commutation est exécutée respectivement du premier au second mode de transmission dès que le contrôle effectué dans l'unité à processeur considérée (6) indique qu'un télégramme transmis n'a pas satisfait aux exigences prédéterminées.

2. Procédé suivant la revendication 1, caractérisé par le fait que le passage des unités à processeur (6) du second au premier mode de transmission est déclenché respectivement pour une instruction de commande de l'unité de contrôle (7,8).

3. Procédé suivant la revendication 1 ou 2, caractérisé par le fait que les unités à processeur (6), qui sont commutées sur le second mode de transmission, signalent, dans le télégramme de réponse qui succède à la commutation, le nouvel état et le sens de transmission, qui y est associé, à l'unité de contrôle (7,8).

4. Procédé suivant la revendication 3, caractérisé par le fait que l'unité de contrôle (7,8) appelle cycliquement les unités à processeur (6) en commençant par l'unité à processeur qui est la plus proche de l'unité de contrôle, à la suite d'une signalisation indiquant qu'une unité à processeur (6) est passée au second mode de transmission, et que la commande des unités à processeur (6) situées dans le second mode de transmission est commutée respectivement du second mode de transmission au premier mode de transmission.

5. Procédé suivant l'une des revendications 1 à 4, caractérisé par le fait que l'unité de contrôle (7,8) échange, en tant que dispositif de localisation d'erreur et/ou en tant que dispositif de contrôle en fonctionnement, avec des unités à processeur (6), des informations qui sont associées à des postes terminaux ou à des postes intermédiaires d'un dispositif de transmission d'informations.

6. Montage de commande et/ou de contrôle, comportant au moins une unité de contrôle (7,8) et des unités à processeur (6), qui sont raccordées à l'unité de contrôle (7,8) par l'intermédiaire d'un réseau commun de transmission de télégrammes et sont pourvues d'adresses, l'unité de contrôle (7,8) comportant un dispositif pour émettre des télégrammes d'interrogation, tandis que les unités à processeur (6) comportent respectivement un dispositif pour émettre des télégrammes de réponse, pour la mise en oeuvre du procédé suivant la revendication 1, caractérisé par le fait qu'au moins une partie des unités à processeur (6) comporte, au moins pour un sens de transmission (6), respectivement un dispositif de transmission (30,31;32;37,36;22...24,35), qui comporte un commutateur (35,36), et un dispositif d'évaluation (35) pourvu d'une mémoire intermédiaire (32) et servant à évaluer les télégrammes reçus, et que le commutateur (31,36) peut être commandé par le dispositif d'évaluation (35) de telle sorte que la sortie (A1,A2) du dispositif de commutation (35,36) est raccordée, dans un premier mode de transmission, par l'intermédiaire du commutateur (31,36), à l'entrée (E2,E1) de l'unité de transmission et, dans un second mode de transmission, uniquement dans le cas où des exigences prédéterminées sont effectivement satisfaites, à une sortie de la mémoire intermédiaire (32).

7. Montage suivant la revendication 6, caractérisé par le fait que l'entrée de commande du commutateur est raccordée à une entrée de commande du dispositif d'évaluation, qui, lorsque les exigences prédéterminées ne sont pas effectivement satisfaites, délivre un premier signal de commande pour le premier mode de transmission et, lors de la réception d'un télégramme de l'unité de contrôle, qui comporte une instruction de commutation en retour, délivre un second signal de commande pour le second mode de transmission.

8. Montage suivant la revendication 6 ou 7, caractérisé par le fait que le montage est agencé en tant que dispositif de localisation d'erreurs et/ou d'un dispositif de contrôle en fonctionnement pour des sections de transmission de la technique de transmission d'informations comportant une section de transmission (4) montée respectivement entre deux terminaux de ligne (1) et qui peut comporte un ou plusieurs postes intermédiaires (2), et que l'unité de contrôle (7,8) est formée par le dispositif de localisation d'erreur et/ou le dispositif de contrôle en fonctionnement et que les unités à processeur (6) sont associées au moins à une partie des terminaux de lignes (1) et/ou au moins à une partie des postes intermédiaires (2).

9. Montage suivant l'une des revendications 6 à 8, caractérisé par le fait que le dispositif d'évaluation comporte un microprocesseur (35) à mémoire RAM (32) en tant que mémoire de données.
